# EUROPEAN PATENT APPLICATION

(11) **EP 0 822 607 A1**
(43) Date of publication of application: **04.02.1998**
(21) Application number: 96309072.5
(22) Date of filing: 12.12.1996
(51) Int. Cl.: H01M 4/42, H01M 10/24

(54) **Rechargeable alkaline electrochemical cell**

(30) Priority: 31.07.1996 US 690116
(71) Applicant: RAYOVAC CORPORATION, Madison Wisconsin 53711 (US)
(72) Inventor: Rose, Janna L., Madison, Wisconsin 53713 (US); Jacus, Robert J., Madison, Wisconsin 53717 (US)
(74) Representative: Harvey, David Gareth

(57) **Abstract**

Rechargeable zinc alkaline electrochemical cells (10) comprise a particulate zinc composition in the anode (12) which is devoid of bismuth or has reduced levels of bismuth, and preferably comprises indium and/or other components as alloying material. The particulate zinc composition may also contain aluminum and/or lead and/or calcium. Preferred quantities of the alloying materials in the zinc particulate are about 200 ppm to about 1000 ppm indium, about 200 ppm to about 1000 ppm lead, about 40 ppm to about 150 ppm aluminum, and about 110 ppm to about 190 ppm calcium. Cells embodying such anode compositions exhibit reduced gas generation at recharge, and reduced incidence of leakage and/or venting incident to electrically abusive uses.

## Description

This invention relates to rechargeable, and thus secondary, alkaline manganese dioxide electrochemical cells having zinc anodes. In particular, this invention relates to anode compositions for mercury-free rechargeable alkaline manganese dioxide cells. The anode compositions of the invention include an improved zinc alloy containing no bismuth or reduced levels of bismuth, and typically including indium, and optionally aluminum, calcium, and/or lead.

In alkaline primary electrochemical cells, it is known that using bismuth as an additive in the zinc anode mix improves the performance of the cell. In the development of alkaline secondary cells, technology known from development and manufacture of primary cells is commonly used where applicable. Thus, prior to this invention, it was common to use an amount of bismuth in the zinc anode mix of secondary alkaline cells similar to the amount of bismuth commonly used in primary cells.

It is known that secondary reactions in alkaline cells having zinc anodes and manganese dioxide cathodes generate unwanted gaseous reaction products. However, it can be difficult to identify reactants responsible for such gas generation, or to control or eliminate such reactions.

Where sufficient gas is produced, such gaseous reaction products can be detrimental to the integrity of the cell. Namely, excess gas pressure in the cell can result in rupture of the cell, which may be accompanied by leakage of electrolyte or of other chemicals out of the cell. Such leakage of contents out of the cell is unacceptable to both cell users and cell manufacturers.

In rechargeable alkaline cells, the cell is recharged after use, and is thus subject to numerous discharge/recharge use cycles during its use life. As a cell progresses through the sequential discharge/recharge cycles, the cell has a tendency to generate additional gas during each cycle. Such gas may be generated during the recharge portion of the use cycle as well as during the discharge portion of the use cycle. Thus, chemical compositions which are acceptable for use in a single-discharge cell, such as a primary cell, may, over a multiplicity of use cycles, generate so much gas as to be unacceptable for use in a multiple-cycle, namely rechargeable, cell.

There are two general avenues for managing the amount of gas in an electrochemical cell. The first avenue is to make provision for minimizing or reducing the amount of gas generated in the cell. The second avenue is to make provision for recombining portions of the gas so produced, back into solid state in the cell. In general, it is desired that such gas not be vented. This invention is directed toward minimizing or reducing the amount of gas generated. Of course, cells of the invention can also include provision for recombining such gas as may be produced.

This invention is directed toward providing improved novel rechargeable alkaline electrochemical cells which exhibit reduced gas generation. In cells of the invention, the zinc alloy used in the anode composition assists in suppressing gas generation in the cell. Accordingly, the cell can physically undergo multiple discharge/recharge use cycles with a reduced amount of gas pressure being built up in the cell and thereby reduced incidence of venting and/or leakage from the cell.

It is known that use of manganese dioxide as an active cathode material in a rechargeable alkaline secondary cell is optimized if the discharge capacity is limited to about one electron-reduction of manganese dioxide. If the reduction proceeds beyond the one electron transfer, that portion of the manganese compound, which so proceeds, may not be susceptible to being recharged.

If such a rechargeable cell were provided with a zinc anode having an electrochemical capacity equal to or higher than approximately the one electron discharge capacity of the manganese dioxide cathode, then discharge of the cell would generally have to be terminated at or near the end of the one-electron reduction, in order to preserve efficient rechargeability of the cell.

To overcome the problems discussed above, the practice of "zinc limitation" is now known. Using zinc limitation, the quantity of zinc supplied in the anode has a pre-determined oxidation capacity preferably equal to or less than the corresponding reduction capacity of the active manganese dioxide in the cathode at the single electron limit. Respective reaction "rate" capacities are, of course, separate and distinct parameters, not in general addressed here.

When closed circuit voltage in a rechargeable alkaline cell declines below a useful end point voltage of more or less about 0.9 volt, its utility to the user declines noticeably. However, it is not uncommon for the user to, intentionally or otherwise, drain the cell even further.

Thus, when the useful zinc reaction capacity is exhausted, even though there may be active manganese dioxide left in the cathode, the cell cannot be discharged further, of its own power to produce useful work, because the reaction capacity of the zinc anode has been depleted. The voltage of a single such cell eventually declines to approximately zero if it remains connected to a load.

Such further drains can be quite abusive to the cell in that irreversible and undesirable reactions occur as the cell is further drained, especially as the voltage approaches zero, or is forced into a negative state, even where the cell is zinc-limited to the single electron discharge capacity of the cathode. A particularly undesirable, but typical, reaction in such situations is generation of more than the usual amount of gas when such overdischarge occurs.

If the discharge-exhausted cell is connected in series with at least one additional cell which still has some ampere-hour capacity left, then the exhausted cell can be subjected to reverse polarity (also referred to herein as Series Reversal) if the cell remains connected to the load and in series with the cell still having some ampere-hour capacity left. Namely, the one or more cells which are still active force current to pass through the exhausted cell, thus creating the reverse polarity.

Reversing polarity in a primary (disposable) cell under such conditions is of lesser consequence to the cell because the polarity reversal occurs after the cell has been fully discharged and therefore after its useful life has been exhausted. Reversing polarity in a secondary (rechargeable) cell, however, has real consequences because, after the zinc has been depleted in a secondary cell, the above-mentioned detrimental and potentially irreversible electrochemical changes can occur in the cell. The mere fact that a secondary cell has been fully discharged does not mean that its use life has been exhausted. Rather, the cell will typically be recharged, and discharged to produce useful work again, and again, through a number of use cycles.

Similar to the discharge portion of the use cycle, gas may be generated in a secondary cell during recharging of the cell. As with the discharge phase of the cycle, such generation of gas during recharge is undesirable, and is preferably avoided, suppressed, or reversed. This invention is directed primarily toward avoiding or suppressing generation of gas during the recharge portion of the use cycle.

Since a rechargeable cell is intended to be cycled through several, preferably many, discharge/recharge use cycles during its useful life, gas generated during second and subsequent cycles can accumulate with gas generated during earlier cycles, whereby the additive amount of gas can greatly reduce the useful life of the cell, for example by causing venting of the cell, or leakage of material from the cell, before the use life of the cell has been depleted. Thus, in a rechargeable cell, it is important to minimize, preferably eliminate or avoid generation of gas in the cell. The greater the degree of success in suppressing gas generation in the cell, the greater the prospect for extended cell life and a greater number of useful discharge-charge cycles.

It is an object of this invention to provide a secondary alkaline zinc-manganese dioxide cell having a novel anode composition, and wherein the cell has reduced tendency to generate gas, especially under abusive conditions.

A preferred embodiment of the invention is a secondary alkaline zinc-manganese dioxide cell having a zinc alloy in the anode mix, wherein the zinc alloy is devoid of bismuth or has a reduced level of bismuth.

The invention can be embodied in a secondary alkaline zinc-manganese dioxide cell having a zinc alloy in the anode mix, wherein the zinc alloy includes indium, and optionally calcium and/or lead and/or aluminum.

Some of the objects are obtained in a first family of embodiments wherein a rechargeable alkaline electrochemical cell comprises a manganese dioxide cathode, a zinc anode, an alkaline electrolyte, and a separator electrically separating the anode and the cathode. The anode includes a particulate zinc composition which is devoid of bismuth or contains up to 100 parts per million (ppm) by weight bismuth, and may contain about 200 ppm to about 1000 ppm by weight alloying indium, zero up to about 1000 ppm by weight alloying lead, zero up to about 150 ppm by weight alloying aluminum, and zero up to about 190 ppm calcium.

In some embodiments, the concentration of indium in the particulate zinc composition is preferred to be about 400 ppm by weight to about 600 ppm by weight.

In some embodiments, the concentration of lead in the particulate zinc composition is preferred to be about 400 ppm by weight to about 700 ppm by weight, with a more preferred concentration being about 450 ppm by weight to about 550 ppm by weight.

Where aluminum is used, typical concentration of aluminum is about 50 ppm by weight to about 110 ppm by weight, preferably about 50 ppm to about 90 ppm.

Where calcium is used, typical concentration of calcium is about 110 ppm to about 190 ppm.

Other objects of the invention are obtained in a mercury-free rechargeable alkaline electrochemical cell comprising a manganese dioxide cathode, a zinc anode, a separator electrically separating the anode and the cathode, and an alkaline electrolyte. The anode includes particulate zinc alloy having zero to about 100 ppm bismuth, and which contains about 200 ppm by weight to about 1000 ppm by weight indium.

A third family of embodiments comprehends zinc-based anode mixes as described above.

In all embodiments, bismuth concentration in the particulate zinc composition is no more than about 100 ppm.

The invention will now be described by way of example with reference to the accompanying drawing, in which:

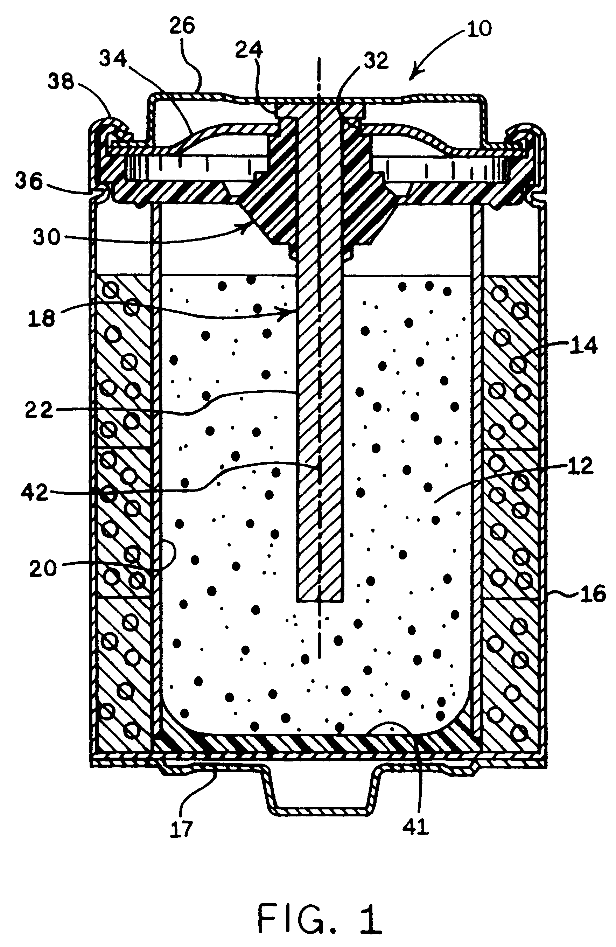

FIGURE 1 shows a cross-section of an electrochemical cell of the invention, e.g. a "D"-size cell.

The invention is not limited in its application to the details of construction and the arrangement of the components set forth in the following description or illustrated in the drawing. The invention is capable of being embodied, practiced or carried out in various ways. Also, it is to be understood that the terminology and phraseology employed herein is for purpose of description and illustration and should not be regarded as limiting. Like reference numerals are used to indicate like components.

Referring to FIGURE 1, a rechargeable alkaline cell 10 of the invention includes an anode 12, including an electroactive anode mix comprised primarily of zinc, a cathode 14 including an electroactive cathode mix comprised primarily of manganese dioxide, and an aqueous alkaline electrolyte. The anode, cathode, and electrolyte are housed in a container 16 for the cell, which also serves as the cathode current collector. Cathode cap 17 is secured to container 16 and serves as the cathode terminal. An anode current collector 18 is in intimate physical contact with the anode mix. A separator 20 is physically located between the anode and the cathode and insulates the anode and cathode from direct physical contact with each other.

The inventors herein have surprisingly discovered that use of bismuth in the zinc alloy which is used in the anode mix contributes to generation of gas in the cell as the cell is being recharged, along with corresponding increased incidence of leakage from such cells. Such leakage is, of course, not acceptable to either the manufacturer of the cell, or the user of the cell. Accordingly, cells of the invention contain a reduced level of bismuth and may contain no chemically reactive, or catalytically active, amounts of bismuth. Such gas generation is of no concern in primary cells because primary cells are, by definition, not recharged.

The cathode mix generally comprises an admixture of electrolytic manganese dioxide, together with about 5% to about 15% by weight graphite. The cathode mix can also comprise inorganic or organic binder materials such as polyethylene, polytetrafluoroethylene (PTFE), polysulfone, or the like. In addition, the cathode mix typically includes a limited amount of water and/or electrolyte to facilitate pressure molding of the cathode mass, particularly for molding cylindrical cathode pellet rings. The formed cathode rings generally include a limited amount of alkaline electrolyte as a pre-wet to facilitate passage of electrical current to, through, and from the cathode. All other conventionally-known cathode mix additives are also contemplated for use in the invention. Thus, the invention contemplates any cathode having conventionally known composition and structure.

For use in cylindrical cells, the electroactive cathode material can be fabricated in the form of an extruded sleeve, or as a plurality of molded rings as shown in FIGURE 1. Molded rings are preferred.

A first layer of the separator 20 can be, for example, cellophane, a regenerated cellulosic product. A second layer of the separator is generally wettable by the electrolyte, thereby to establish good electrical contact between the anode and the cathode. Without limitation, typical composition for the second, wettable, layer is a nonwoven layer of woodpulp and synthetic polymers. In the alkaline cell, the electrolyte permeates the anode mix, the cathode mix, and separator 20, providing electrochemical, but not physical, contact between the anode and the cathode, through the separator.

A preferred electrolyte is a mixture of primarily potassium hydroxide in water. Preferred concentration of the potassium hydroxide is about 30% to about 45%. Typical amounts of conventional additives such as zinc oxide can be included in the electrolyte composition as desired.

Anode current collector 18 includes an elongated shank 22, and a head 24 on one end of the shank. Head 24 is in intimate electrical contact with anode terminal 26.

The anode mix comprises generally a particulate zinc alloy, an organic corrosion inhibitor, a gelling agent, and potassium hydroxide as the alkaline electrolyte. Other conventionally known components for use in the anode mix may generally be used.

The anode mix of the invention employs novel zinc compositions as the electroactive anode material. In that regard, the zinc compositions are devoid of bismuth, or include reduced levels of bismuth. In a first family of embodiments, the zinc composition includes indium as an alloying material, and may in addition include lead and/or aluminum and/or calcium. In general, indium may be used alone in an amount of about 200 ppm by weight to about 1000 ppm by weight in the zinc alloy. When the indium is used alone, namely without lead, calcium, or aluminum, but still with the reduced amount of bismuth, preferred amounts of indium are about 250 ppm by weight to about 700 ppm by weight in the zinc alloy. Such composition of zinc, with the reduced level of bismuth, avoids or suppresses gas generation as compared to an alloy comprising indium and lead in combination with about 500 ppm bismuth.

In a second family of embodiments, the particulate zinc composition can, and preferably does, include aluminum and/or calcium as alloying components in addition to the indium, the aluminum and calcium being further instrumental in suppressing gas generation. The aluminum, where used, is present in an amount of about 40 ppm by weight to about 150 ppm by weight, preferably about 50 ppm by weight to about 110 ppm by weight. The calcium, where used, is present in an amount of about 110 ppm by weight to about 190 ppm by weight.

In some embodiments, the particulate zinc composition can, in addition, include lead. Thus, these embodiments comprise indium, aluminum, calcium, and lead, as alloying additives in the zinc. In these embodiments, the indium is present in an amount of about 200 ppm by weight to about 1000 ppm by weight, preferably about 250 ppm by weight to about 600 ppm by weight. The aluminum is present in an amount of about 40 ppm by weight to about 150 ppm by weight, preferably about 50 ppm by weight to about 110 ppm by weight. The lead is present in an amount of about 200 ppm by weight to about 1000 ppm by weight, preferably about 400 ppm by weight to about 700 ppm by weight. The calcium is present preferably in an amount of about 110 ppm by weight to about 190 ppm by weight.

After consideration of the above alloying materials, the balance of the alloy is typically zinc. While specific alloying materials, and amounts of such materials, have been described, other materials, and other amounts of materials, may be used in the alloy in addition to or in place of the materials described, for the purpose of managing gas in the cell as well as for other purposes.

While the zinc composition has been generally discussed in terms of an alloy, and while use of one or more alloying materials is generally preferred, the metal component of the anode mix can be pure battery-grade zinc, without any alloying material. The important factor is the absence of bismuth, or at least the reduced level of bismuth, in the zinc composition, and preferably in the anode mix.

None of the embodiments of the invention include conventionally-known concentrations of bismuth such as 500 ppm by weight bismuth in the particulate zinc composition. Rather, bismuth is either absent from the particulate zinc used in the anode mix or is present in significantly reduced amount such as 100 ppm or less. Accordingly, the anode mixes of the invention, and the cells made therewith, contain the above reduced amounts of bismuth, if any. Reduction of the bismuth reduces or eliminates the bismuth contribution to generation of gas during recharge of the cell, whereby the overall amount of gas generated during recharge is reduced.

Similarly, anode mixes of the invention preferably contain no mercury. Correspondingly, cells of the invention preferably are devoid of mercury.

A preferred range of particulate zinc compositions of the invention is

| | |
|---|---|
| Indium | 400-600 ppm |
| Aluminum | 50-90 ppm |
| Lead | 450-550 ppm |
| Bismuth | 0-100 ppm |
| Calcium | 110-190 ppm |

Typical particulate zinc compositions of the invention are shown in the following Table 1 as Alloys I-VIII. Typical zinc alloys for mercury-free alkaline zinc/manganese dioxide cells of the prior art include significantly greater levels of bismuth. Exemplary such alloys are shown in Table 1 as Comparative Alloys IX, X, and XI. All numbers shown in Table 1 are parts per million (ppm). Except for impurities, the balance of the alloy compositions shown in Table 1 are zinc.

**TABLE 1**

| EXAMPLE NO. | COMPONENT | | | | |
|---|---|---|---|---|---|
| | Indium | Aluminum | Lead | Bismuth | Calcium |
| Ex I | 500 | 70 | 500 | -0- | -0- |
| Ex II | 500 | 70 | -0- | -0- | -0- |
| Ex III | 500 | -0- | -0- | -0- | -0- |
| Ex IV | 530 | 90 | 480 | 85 | 125 |
| Ex V | 470 | 80 | 450 | -0- | 125 |
| Ex VI | 480 | 70 | 440 | 40 | 120 |
| Ex VII | 570 | 70 | 500 | 60 | 150 |
| Ex VIII | 510 | 70 | 520 | -0- | 190 |
| Comp Ex IX | 500 | -0- | 500 | 500 | -0- |
| Comp Ex X | 500 | -0- | -0- | 500 | 150 |
| Comp Ex XI | 500 | 70 | -0- | 250 | 150 |

The particulate zinc is generally employed as a powder having particle sizes typically used in zinc-manganese dioxide alkaline cells.

Referring again to FIGURE 1, a preferred embodiment of the cell 10 is assembled as follows. The desired number of manganese dioxide cathode rings are inserted into the cathode container. Three manganese dioxide cathode rings are shown in FIGURE 1. The cathode rings in the cathode container define, in combination, an empty central cavity for receiving the anode material thereinto. An appropriate separator 20 is inserted into the central cavity and expanded outwardly against the cathode rings. An electrical insulator disc or functionally similar electrically insulating material is applied at the bottom of separator 20 to electrically seal off the bottom of the anode cavity, preventing anode material placed therein from by-passing separator 20 and thereby shorting to the cathode rings or the cathode container. A mass of such electrically insulating material is shown at 41 in FIGURE 1.

Appropriate amounts of zinc anode mix and electrolyte are then placed in the opening defined inside the separator. The combination of anode mix, cathode material, and separator then generally fill the cathode can, allowing head space for collection and recombination of gases generated during normal operation of the cell.

The anode current collector assembly is then emplaced in the can, driving the shank 22 of current collector 18 into the zinc anode mix. This brings the shank into electrical contact with the zinc anode mix. The zinc anode mix is generally a gel consistency, sufficiently fluid to establish and maintain good electrical contact with current collector 18.

The container 16 is then crimped at groove 36 adjacent seal body 30; and the distal end of the cathode container is crimped inwardly at 38. This urges the annular distal end of the container, and the annular distal edge of seal body 30 against the outer circumferential edge of anode terminal 26, and indirectly against the outer circumferential edge of washer 34. This crimping completes the closure of the cell, including the incorporation of the anode current collector assembly into the cell, thereby forming a desirably tight closure and seal of the cell.

The cathode cap 17, including the contact nubbin, is secured to the closed bottom of the cathode container, as convenient.

FIGURE 1 illustrates a finished cell as just described. As seen therein, central axis 42 of the anode current collector assembly serves as the central axis of the cell.

While choosing to not be bound by theory, the inventors anticipate that the benefits accruing to the novel cells of the invention relate to an unexplained reduction in the amount of gas generated when the cell is recharged, if the anode zinc contains no bismuth or the reduced amount of bismuth, and especially if the anode mix contains small amounts of indium and optionally aluminum, lead, or calcium.

### EXAMPLES 1-4

For Examples 1-4, size "D" alkaline zinc-manganese dioxide cells were made. For Examples 1, 2, and 3, cells were made with zinc alloy of Compositions I, II, and III, respectively of the invention. Additional materials in the anode compositions, in addition to the zinc alloys, included small amounts of organic corrosion inhibitor and a gelling agent, plus aqueous KOH. The separators each had a first cellophane layer and a second nonwoven layer of a combination of woodpulp and synthetic polymers. The cathode containers were nickel-plated steel, with carbon coating on the nickel.

Corresponding size "D" control cells were made, as Comparative Example 4, with conventional anode compositions, namely the conventional alloy of Composition IX.

The above cells were subjected to two series of severe drain tests, in order to demonstrate the benefits of the anode composition in rechargeable alkaline cells. In the first series of tests, individual cells were placed on a discharge/recharge cycle comprising loading, and thereby discharging, each cell at 2.2 ohms for 24 hours, followed by 24 hours of recharge. Recharging was accomplished using a conventional charging process. Then the cycle was repeated. After six repetitions of the discharge/recharge cycle, increase in height was measured on each cell, to obtain a measure of cell expansion caused by generation of gas in the cell. The cell expansion data in Table 2 represent increases in height of the cells, in inches, (and in mm).

The cells were also inspected for leakage. The results of the first series of tests are represented in Table 2 following as the "24x24" test. The average increase in height is shown in Table 2 for cells of Examples 1-3 and Comparative Example 4. Greater increase in height represents greater gas pressure in the cell, and corresponds with a greater amount of gas in the cell. The cells leaking test results shown in Table 2 indicate the number of cells leaking upon completion of the test series, followed by the number of cells tested for the respective cell type.

For each test in the Series Reversal tests, 3 cells were placed on a discharge/recharge use cycle comprising loading, and thus discharging, 3 cells in series at 2.2 ohms, each cell, for 24 hours. Eight sets, of three cells each, were tested for both Examples 1-3 and Comparative Example 4. The cells were then individually recharged for 24 hours. Then the cycle was repeated. After five repetitions of the discharge/recharge cycle, the cells were inspected for leakage. The results of this series of tests are represented in Table 2 following as the "Series Reversal" test. Again, the cells leaking test results indicate the number of cells leaking, followed by the number of cells tested for the respective cell type.

**TABLE 2**

| Test Type | EXAMPLE NUMBER | | | |
|---|---|---|---|---|
| | 1 | 2 | 3 | Comp 4 |
| 24X24 | | | | |
| Cells Leaking | 0/8 | 0/8 | 0/8 | 2/8 |
| Ave Expansion | .0156 (0.40mm) | .0133 (0.34mm) | .0133 (0.34mm) | .0295 (0.75mm) |

| Series Reversal | | | | |
|---|---|---|---|---|
| Leakage | 0/24 | 0/24 | 0/24 | 5/24 |

### EXAMPLES 5-6

For Examples 5-6, size "AAA" alkaline zinc-manganese dioxide cells were made. For Example 5, cells were made with zinc alloy of Composition I. Additional materials in the anode composition, in addition to the zinc alloy, were small amounts of organic corrosion inhibitor, and a gelling agent, plus aqueous KOH. The separators each had a first cellophane layer and a second nonwoven layer of a combination of woodpulp and synthetic polymers. The cathode containers were nickel-plated steel, with carbon coating on the nickel as in EXAMPLES 1-4.

Corresponding size "AAA" control cells were made, as Comparative Example 6, with conventional anode compositions, namely the conventional alloy of Composition IX.

The cells were evaluated in a series of tests. The results of those tests are illustrated in Table 3 following. "Uses" indicate the particular number of discharge/recharge use cycles the cell has completed. For the "gas" test, the cells were opened under water and the gas displacement measured in the water, in milliliters.

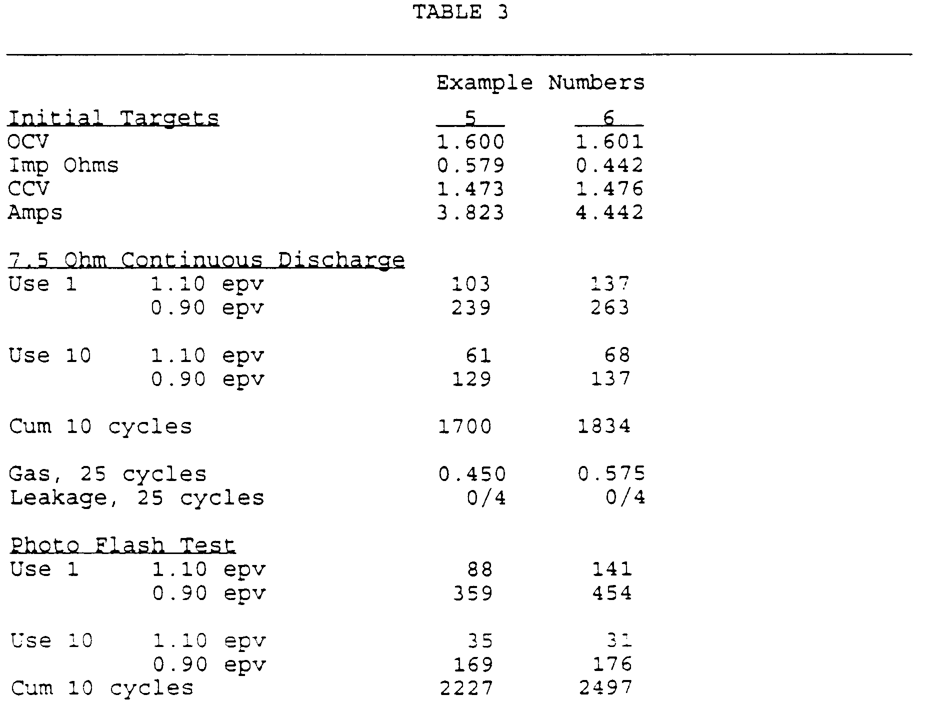

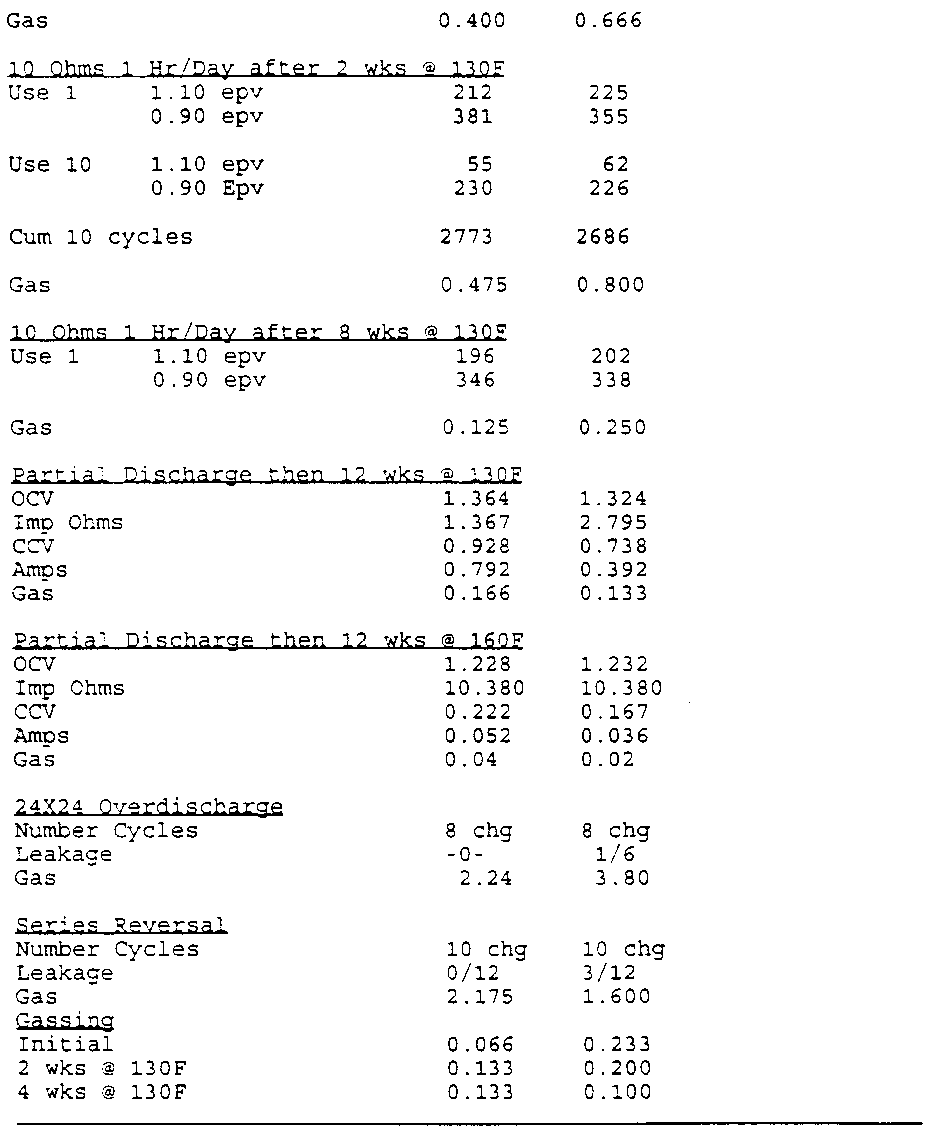

Table 3 shows that cells of Example 5 of the invention have output capacities generally similar to those of the conventional cells, as illustrated by a variety of tests, while tolerating the abusive 24X24 test and the Series Reversal Test without cell leakages. The conventional cells, by contrast, show leakages under the abuse testing conditions. Thus, cells of the invention have improved tolerance for abusive treatment while providing general usage capacities similar to those of conventional cells.

As used herein, "recharge," "charge," "recharging," "charging" and the like refer to known charge processes for recharging rechargeable consumer-size cells of e.g. "D," "C," "AA," and "AAA" sizes.

Those skilled in the art will now see that certain modifications can be made to the articles, apparatus, and methods herein disclosed with respect to the illustrated embodiments, without departing from the spirit of the instant invention. And while the invention has been described above with respect to the preferred embodiments, it will be understood that the invention is adapted to numerous rearrangements, modifications, and alterations, and all such arrangements, modifications, and alterations are intended to be within the scope of the appended claims.

## Claims

1. A rechargeable alkaline electrochemical cell (10), comprising:
(a) a manganese dioxide cathode (14);
(b) a zinc anode (12), said zinc anode comprising a zinc anode mix, said zinc anode mix comprising a particulate zinc composition having zero up to about 100 ppm by weight bismuth;
(c) an alkaline electrolyte; and
(d) a separator (20) electrically separating said zinc anode and said cathode.

2. A rechargeable alkaline electrochemical cell as in Claim 1, said particulate zinc composition comprising about 200 ppm by weight to about 1000 ppm by weight indium, preferably about 400 ppm by weight to about 600 ppm by weight indium.

3. A rechargeable alkaline electrochemical cell as in Claim 2, said particulate zinc composition further comprising about 40 ppm by weight to about 150 ppm by weight aluminum.

4. A rechargeable alkaline electrochemical cell as in Claim 2 or Claim 3, said particulate zinc composition comprising about 200 ppm by weight to about 1000 ppm by weight lead, preferably about 400 ppm by weight to about 700 ppm by weight lead.

5. A rechargeable alkaline electrochemical cell as in Claim 2, said particulate zinc composition further comprising about 200 ppm by weight to about 1000 ppm by weight lead and about 40 ppm by weight to about 150 ppm by weight aluminum.

6. A rechargeable alkaline electrochemical cell as in Claim 1, said particulate zinc composition comprising about 400 ppm by weight to about 600 ppm by weight indium and further comprising about 400 ppm by weight to about 700 ppm by weight lead and about 50 ppm by weight to about 110 ppm by weight aluminum.

7. A rechargeable alkaline electrochemical cell as in Claim 1, said electrochemical cell being devoid of mercury and/or said zinc anode mix being devoid of bismuth, e.g. said particulate zinc composition being devoid of bismuth.

8. A rechargeable alkaline electrochemical cell as in Claim 1, said particulate zinc composition comprising about 450 ppm by weight to about 550 ppm by weight lead, about 400 ppm by weight to about 600 ppm by weight indium, about 50 ppm by weight to about 90 ppm by weight aluminum, and about 110 ppm by weight to about 190 ppm by weight calcium.

9. An anode mix for use in a rechargeable alkaline cell, said anode mix comprising:
(a) a particulate zinc composition having zero up to about 100 ppm by weight bismuth;
(b) a gelling agent; and
(c) an alkaline electrolyte.

10. An anode mix as in Claim 9, said particulate zinc composition comprising about 200 ppm by weight to about 1000 ppm by weight indium preferaby about 250 ppm by weight to about 700 ppm by weight indium, more preferably about 400 ppm by weight to about 600 ppm by weight indium.

11. An anode mix as in Claim 9 or Claim 10, said particulate zinc composition further comprising about 40 ppm by weight to about 150 ppm by weight aluminum.

12. An anode mix as in Claim 9, 10 or 11, said particulate zinc composition further comprising about 200 ppm by weight to about 1000 ppm by weight lead, preferably about 400 ppm by weight to about 700 ppm by weight lead.

13. An anode mix as in Claim 10, said particulate zinc composition further comprising about 200 ppm by weight to about 1000 ppm by weight lead and about 40 ppm by weight to about 150 ppm by weight aluminum.

14. An anode mix as in Claim 9, said particulate zinc composition comprising about 250 ppm by weight to about 700 ppm by weight indium, and further comprising about 400 ppm by weight to about 700 ppm by weight lead and about 50 ppm by weight to about 110 ppm by weight aluminum.

15. An anode mix as in Claim 9, said electrochemical cell being devoid of mercury, and/or said anode mix being devoid of bismuth, e.g. said particulate zinc composition being devoid of bismuth.

16. An anode mix as in Claim 9, said particulate zinc composition comprising about 450 ppm by weight to about 550 ppm by weight lead, about 400 ppm by weight to about 600 ppm by weight indium, about 50 ppm by weight to about 90 ppm by weight aluminum, and about 110 ppm by weight to about 190 ppm by weight calcium.
